# EUROPÄISCHE PATENTSCHRIFT

(11) **EP 1 595 356 B1**
(45) Veröffentlichungstag und Bekanntmachung des Hinweises auf die Patenterteilung: **12.07.2006**
(21) Anmeldenummer: 03766335.8
(22) Anmeldetag: 29.07.2003
(51) Int. Cl.: H04L 9/00

(54) **ERZEUGEN VON ERGEBNISWERTEN MIT EINER VORGEGEBENEN EIGENSCHAFT**
GENERATION OF RESULT VALUES HAVING A PREDEFINED CHARACTERISTIC
GENERATION DE VALEURS DE RESULTAT PRESENTANT UNE CARACTERISTIQUE PREDETERMINEE

(30) Priorität: 31.07.2002 DE 10234973
(43) Veröffentlichungstag der Anmeldung: 16.11.2005
(73) Patentinhaber: Giesecke & Devrient GmbH, 81677 München (DE)
(72) Erfinder: KUBIERSCHKY, Max, 80538 München (DE); VATER, Harald, 35398 Giessen (DE); RICHTER, Oliver, 81735 München (DE)
(74) Vertreter: Dendorfer, Claus
(86) Internationale Anmeldenummer: PCT/EP2003/008345
(87) Internationale Veröffentlichungsnummer: WO 2004/013751

(56) Entgegenhaltungen:
- US-A- 5 850 450
- US-A1- 2001 036 267
- PATENT ABSTRACTS OF JAPAN vol. 2000, no. 05, 14. September 2000 (2000-09-14) & JP 2000 056680 A (DAINIPPON PRINTING CO LTD), 25. Februar 2000 (2000-02-25) in der Anmeldung erwähnt
- MENEZES A J ET AL: "Handbook of Applied Cryptography" , HANDBOOK OF APPLIED CRYPTOGRAPHY, CRC PRESS SERIES ON DISCRETE MATHEMATICES AND ITS APPLICATIONS, BOCA RATON, FL, CRC PRESS, US, PAGE(S) 133-134,138 XP002155110 ISBN: 0-8493-8523-7 Absatz [4.1.1]

## Beschreibung

Die Erfindung betrifft allgemein das technische Gebiet, in einer rechenleistungs- und speicherplatzlimitierten Umgebung Ergebniswerte zu erzeugen, von denen jeder eine vorgegebene Eigenschaft aufweist. Ferner betrifft die Erfindung das Vorausberechnen von Anpassungswerten, die bei der genannten Ergebniswert-Erzeugung eingesetzt werden. Ein beispielhaftes Anwendungsgebiet der Erfindung ist die durch eine Chipkarte oder ein Chipmodul durchgeführte Generierung von Primzahlen zur Schlüsselerzeugung für kryptographische Algorithmen.

Ein tragbarer Datenträger, der beispielsweise den RSA-Algorithmus unterstützt, muß in typischen Anwendungen im Laufe seiner Lebensdauer eine erhebliche Anzahl von RSA-Schlüsselpaaren erzeugen. Für jedes Schlüsselpaar werden zwei große Primzahlen benötigt, die geheimgehalten werden müssen und z.B. je 512 Bit oder je 1024 Bit oder je 2048 Bit lang sind.

Unter Berücksichtigung der Tatsache, daß der beispielsweise als Chipkarte oder als Chipmodul ausgebildete Datenträger einen stark limitierten Speicherplatz aufweist und nur über eine relativ geringe Rechenleistung verfügt, stellt die Erzeugung derartiger Primzahlen ein beträchtliches Problem dar. Es ist auch nicht zu erwarten, daß dieses Problem in Zukunft an Bedeutung verlieren wird, da in demselben Maße, wie die Leistungsfähigkeit von tragbaren Datenträgern zunimmt, auch mit gesteigerten Angriffsmöglichkeiten gerechnet werden muß und daher größere Schlüssellängen erforderlich werden.

Aus dem US-Patent 5,850,450 ist ein tragbares elektronisches Datenmodul mit einem Zufallszahlengenerator bekannt. Primzahlen zur RSA-Schlüsselberechnung werden gebildet, indem zunächst Bytes des Zufallszahlengenerators ausgelesen und zu einer Zufallszahl zusammengefügt werden. Zu dem Ergebnis wird wiederholt der Wert 2 addiert, bis eine Primzahl vorliegt. Dieses Verfahren ist jedoch sehr rechenzeitaufwendig.

Aus der japanischen Patentveröffentlichung JP 2000056680 ist eine Chipkarte bekannt, die Zufallszahlen von einem Terminal erhält. Aus diesen Zufallszahlen erzeugt die Chipkarte Primzahlen, um einen kryptographischen Schlüssel zu generieren. Dieses Verfahren setzt jedoch ein vertrauenswürdiges Terminal voraus, was bei einer allgemeinen Verwendung der Chipkarte in der Regel nicht garantiert werden kann.

Die Erfindung hat die Aufgabe, die genannten Probleme zumindest zum Teil zu lösen. Insbesondere soll durch die Erfindung eine Technik zum Erzeugen von Ergebniswerten bereitgestellt werden, die für rechenleistungs- und speicherplatzlimitierte Umgebungen, wie z.B. Chipkarten oder Chipmodule, einsetzbar ist. Jeder Ergebniswert soll dabei eine vorgegebene Eigenschaft aufweisen, wie z.B. die Primzahl-Eigenschaft. Die erfindungsgemäße Technik soll sich vorzugsweise für sicherheitskritische Anwendungen, wie z.B. die Schlüsselberechnung für kryptographische Algorithmen, eignen.

Erfindungsgemäß wird diese Aufgabe ganz oder zum Teil gelöst durch Verfahren mit den Merkmalen von Anspruch 1, 7 und 8, einen Datenträger gemäß Anspruch 10 und eine Vorrichtung gemäß Anspruch 12. Die abhängigen Ansprüche definieren bevorzugte Ausgestaltungen der Erfindung. Die Aufzählungsreihenfolge der Schritte in den Verfahrensansprüchen soll nicht als Einschränkung des Schutzbereichs verstanden werden. Es sind vielmehr Ausgestaltungen der Erfindung vorgesehen, bei denen diese Verfahrensschritte in anderer Reihenfolge oder ganz oder teilweise parallel oder ganz oder teilweise ineinander verzahnt *(interleaved)* ausgeführt werden.

Die Erfindung geht von der Grundidee aus, zur Erzeugung der Ergebniswerte vorausberechnete und gespeicherte Informationen zu verwenden. Diese als Anpassungswerte bezeichneten Informationen beeinflussen die Ergebniswert-Erzeugung derart, daß jeder Ergebniswert die gewünschte Eigenschaft aufweist. Durch geeignete Wahl der verwendeten Algorithmen und Datenstrukturen sind für die Ergebniswert-Erzeugung unter Verwendung der Anpassungswerte nur eine geringe Rechenleistung und nur wenig Speicherplatz erforderlich.

Die Erfindung stellt damit die technischen Grundlagen bereit, um beispielsweise in Chipkarten oder Chipmodulen Hunderte oder Tausende von RSA-Schlüsselpaaren schnell bereitstellen zu können. Schlagwortartig könnte man in diesem Anwendungsbeispiel von einer "komprimierten Abspeicherung von Primzahlen" sprechen, wobei sich "Kompressionsfaktoren" von 10 bis 100 oder mehr erreichen lassen. Während die Berechnung von Primzahlen ein bevorzugtes Anwendungsgebiet ist, ist die Erfindung nicht darauf beschränkt. Sie kann vielmehr für alle mathematischen Größen verwendet werden, die schwer zu erzeugen sind. Die Erfindung ist auch nicht auf den Einsatz bei Chipkarten oder Chipmodulen beschränkt, sondern sie eignet sich allgemein für rechenleistungs- und speicherplatzlimitierte Umgebungen.

Die Vorausberechnung der Anpassungswerte braucht nicht in der rechenleistungs- und speicherplatzlimitierten Umgebung zu erfolgen. Bei dem Anwendungsbeispiel von Chipkarten und Chipmodulen steht hierzu vielmehr die Personalisierungsvorrichtung mit einem vertrauenswürdigen Computer mit hoher Rechenleistung zur Verfügung. Die Anpassungswerte können jedoch auch im Zusammenhang mit anderen Vorgängen, beispielsweise bei der Komplettierung oder Initialisierung des Datenträgers oder in einem davon getrennten Schritt, berechnet und in einen Speicher des Datenträgers eingeschrieben werden.

Der erfindungsgemäß eingesetzte Pseudozufallszahlengenerator ist bevorzugt kryptographisch sicher. Dies heißt, daß selbst bei Kenntnis einer Folge von bislang erzeugten Zufallszahlen nicht mit realistischem Aufwand auf die nächste Zufallszahl geschlossen werden kann. Beispielsweise kann der Pseudozufallszahlengenerator ein Verschlüsselungsmodul aufweisen, das Eingangswerte, die sich von Schritt zu Schritt möglicherweise nur geringfügig verändern, in weit gestreute Zufallszahlen umsetzt.

Um eine hohe Speicherplatzersparnis zu erreichen, beträgt die Stellenanzahl jedes Anpassungswerts - z.B. die Bitlänge bei binärer Schreibweise - vorzugsweise höchstens die Hälfte oder höchstens ein Fünftel oder höchstens ein Zehntel der Stellenanzahl des entsprechenden Ergebniswerts.

Das Verfahren zum Vorausberechnen der Anpassungswerte, der Datenträger und die Vorausberechnungs-Vorrichtung weisen in bevorzugten Weiterbildungen Merkmale auf, die den oben erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen zeigen:
Fig. 1 ein Blockdiagramm der Komponenten eines Ausführungsbeispiels der Erfindung,
Fig. 2 ein Flußdiagramm eines beispielhaften Verfahrensablaufs zum Berechnen von Anpassungswerten, und
Fig. 3 ein Flußdiagramm eines beispielhaften Verfahrensablaufs zum Erzeugen eines Ergebniswerts.

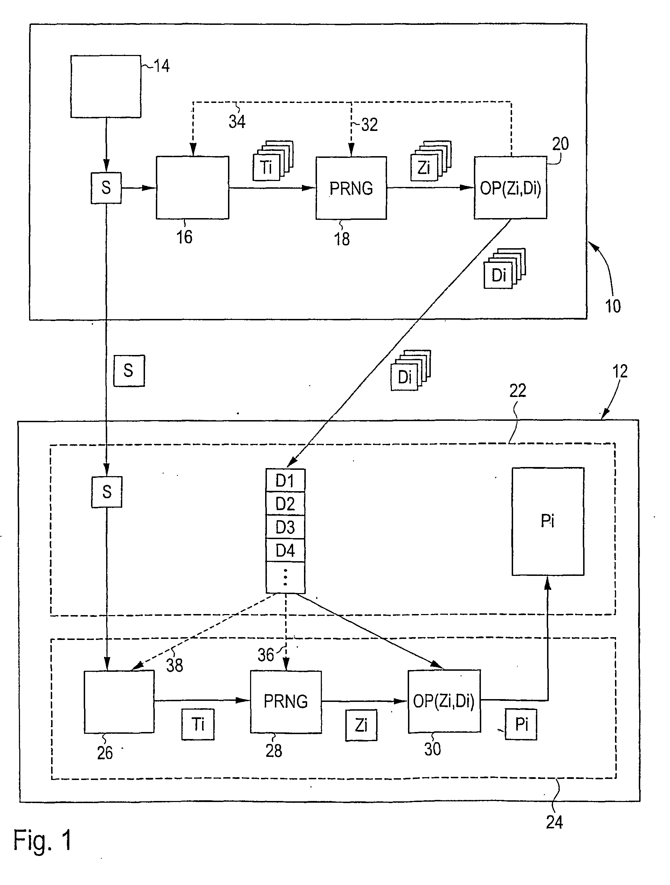

In Fig. 1 sind schematisch Komponenten und Datenstrukturen einer Personalisierungsvorrichtung 10 und eines Datenträgers 12 gezeigt, soweit diese für das Verständnis des vorliegenden Ausführungsbeispiels von Bedeutung sind. Die Personalisierungsvorrichtung 10 ist insgesamt ein komplexes Gerät, das neben mehreren Computern und kryptographischen Einrichtungen auch Druck- und/ oder Prägevorrichtungen und Transportelemente für die Datenträger 12 aufweist. Die in Fig. 1 gezeigten und im folgenden beschriebenen Module der Personalisierungsvorrichtung 10 werden durch Programminstruktionen gebildet, die von einem der Computer der Personalisierungsvorrichtung 10 ausgeführt werden.

Ein Initialwertmodul 14, das beispielsweise als Zufallszahlengenerator ausgebildet sein kann, generiert für jeden Datenträger 12 einen individuellen Initialwert S. Dieser Initialwert S wird einem Basiswertmodul 16 zugeführt, das eine Mehrzahl von Basiswerten Tᵢ berechnet. Genauer gesagt, wird für jeden Ergebniswert Pᵢ, den der Datenträger 12 im Laufe seiner Lebensdauer potentiell erzeugen soll, genau ein entsprechender Basiswert Tᵢ bereitgestellt.

Die Basiswerte Tᵢ dienen als Eingaben für einen kryptographisch sicheren, deterministischen Pseudozufallszahlengenerator 18, der im folgenden auch als PRNG *(pseudo random number generator)* bezeichnet wird. Der PRNG 18 erzeugt nach einem an sich bekannten Verfahren aus jedem Basiswert Tᵢ eine Zufallszahl als Generatorwert Zᵢ. Ein Anpassungswertmodul 20 bestimmt zu jedem Generatorwert Zᵢ einen Anpassungswert Dᵢ. Hierbei ist der Anpassungswert Dᵢ dadurch gekennzeichnet, daß das Ergebnis einer vorbestimmten Operation OP zwischen dem Generatorwert Zᵢ und dem Anpassungswert Dᵢ ein Ergebniswert Pᵢ mit einer vorgegebenen Eigenschaft ist. Im vorliegenden Ausführungsbeispiel ist dies die Eigenschaft, daß Pᵢ eine Primzahl ist.

Der Datenträger 12 weist einen Speicher 22 auf, der in unterschiedlichen Speichertechnologien ausgestaltet sein kann. Ein Prozessorkern 24 steuert die im Datenträger 12 ablaufenden Vorgänge und führt die erforderlichen Berechnungen aus. Der Datenträger 12 kann beispielsweise als Chipkarte oder als Chipmodul oder in einer sonstigen Bauform ausgestaltet sein. Im vorliegenden Ausführungsbeispiel unterstützt der Datenträger 12 ein Verfahren zur Ver- oder Entschlüsselung oder Signatur nach einem an sich bekannten RSA-Algorithmus.

Bei der Personalisierung des Datenträgers 12 überträgt die Personalisierungsvorrichtung 10 den Initialwert S und die ermittelten Anpassungswerte Dᵢ an den Datenträger 12, wo sie im Speicher 22 abgelegt werden. Im hier beschriebenen Ausführungsbeispiel soll der Datenträger 12 dazu ausgelegt sein, während seiner Lebensdauer bis zu 100 RSA-Schlüsselpaare zu erzeugen. Für jedes Schlüsselpaar werden zwei Primzahlen mit je 512 Bit Länge benötigt, so daß insgesamt 200 Ergebniswerte P₁, ..., P₂₀₀ generiert werden müssen. Dies entspricht 200 Anpassungswerten D₁, ..., D₂₀₀, die während der Personalisierung in den Speicher 22 geladen werden.

Im vorliegenden Ausführungsbeispiel weist der Initialwert S eine Länge von 160 Bit auf, und jeder Anpassungswert Dᵢ ist jeweils 12 Bit lang. Insgesamt werden somit 320 Byte im Speicher 22 benötigt. Würden stattdessen die Primzahlen unmittelbar abgespeichert werden, wären dazu 200 * 512 Bit = 12,5 kByte erforderlich. In Ausführungsalternativen wird weiterer Speicherplatz dadurch gespart, daß die Bitlänge und/ oder Gestalt der Anpassungswerte Dᵢ nicht für alle Indexwerte i gleich sind; sie können vielmehr in einer vorab festgelegten Weise vom Indexwert i und/oder von einem zusätzlichen Parameter abhängen.

Der Prozessorkern 24 implementiert durch geeignete Software ein Basiswertmodul 26, einen kryptographisch sicheren, deterministischen Pseudozufallszahlengenerator 28 und ein Ergebniswertmodul 30. Das Basiswertmodul 26 und der im folgenden auch mit "PRNG" bezeichnete Pseudozufallszahlengenerator 28 sind in ihrer Funktion identisch zu den entsprechenden Komponenten 16, 18 der Personalisierungsvorrichtung 10. Dies heißt, daß das Basiswertmodul 26 aus dem Initialwert S dieselben Basiswerte Tᵢ wie in der Personalisierungsvorrichtung 10 erzeugt, und daß der PRNG 28 aus den Basiswerten Tᵢ dieselben Generatorwerte Zᵢ wie in der Personalisierungsvorrichtung 10 erzeugt. Trotz dieser identischen Funktionsweise brauchen natürlich die Programme bzw. Programmabschnitte, die die beiden Basiswertmodule 16, 26 und die beiden Pseudozufallszahlengeneratoren 18, 28 implementieren, nicht notwendigerweise identisch zu sein.

Das Ergebniswertmodul 30 führt dieselbe Berechnung OP mit den Operanden Zᵢ und Dᵢ wie das Anpassungswertmodul 20 aus. Im Gegensatz zum Anpassungswertmodul 20 bestimmt das Ergebniswertmodul 30 aber nicht den Anpassungswert Dᵢ, sondern den aus der Berechnung OP(Zᵢ, Dᵢ) resultierenden Ergebniswert Pᵢ. Durch die beschriebene Konstruktion ist sichergestellt, daß der Ergebniswert Pᵢ die vorgegebene Eigenschaft aufweist, also im vorliegenden Ausführungsbeispiel eine Primzahl ist.

In Fig. 1 ist beispielhaft dargestellt, daß der Ergebniswert Pᵢ zur späteren Verwendung im Speicher 22 abgelegt wird. Weitere Ergebniswerte Pᵢ₊₁, Pᵢ₊₂, ... können auf dieselbe Weise erzeugt werden, solange entsprechende Anpassungswerte Dᵢ₊₁, Dᵢ₊₂, ... verfügbar sind. Wenn beispielsweise RSA-Schlüsselpaare bestimmt werden sollen, sind für jedes Schlüsselpaar zwei Ergebniswerte Pᵢ, Pᵢ₊₁ erforderlich, aus denen auf an sich bekannte Weise das Schlüsselpaar berechnet wird.

Wenn das Schlüsselpaar eine längere Lebensdauer aufweisen soll, kann es im Speicher 22 statt der Ergebniswerte Pᵢ, Pᵢ₊₁ abgelegt werden. Alternativ ist es auch möglich, nur den Indexwert i zu speichern und durch Wiederholung der beschriebenen Schritte zunächst auf Grundlage der Anpassungswerte Dᵢ, Dᵢ₊₁ die Ergebniswerte Pᵢ, Pᵢ₊₁ zu rekonstruieren und daraus das benötigte Schlüsselpaar neu zu berechnen. Die zweite Möglichkeit spart Speicherplatz auf Kosten höherer Programmlaufzeiten. Es können damit Datenträger 12 mit einer Vielzahl - z.B. mehreren tausend - einsatzbereiter RSA-Schlüsselpaare bereitgestellt werden.

In den bisher zusammenfassend beschriebenen Ausführungsformen ging der jeweilige Anpassungswert Dᵢ nur in die vom Anpassungswertmodul 20 bzw. dem Ergebniswertmodul 30 ausgeführte Operation OP ein. Es sind jedoch auch Ausgestaltungen vorgesehen, bei denen der Anpassungswert Dᵢ stattdessen oder zusätzlich die Berechnungsvorgänge in den Basiswertmodulen 16, 26 und/oder die durch die Pseudozufallszahlengeneratoren 18, 28 durchgeführten Berechnungen beeinflußt. Diese Möglichkeit ist in Fig.1 durch die gestrichelten Pfeile 32, 34, 36 und 38 angedeutet.

In weiteren Ausführungsalternativen können die Generatorwerte Zᵢ der Pseudozufallszahlengeneratoren 18, 28 neben dem jeweils aktuellen Basiswert Tᵢ und gegebenenfalls einer Komponente des Anpassungswerts Dᵢ von weiteren Parametern abhängen. Dies kann insbesondere ein interner Zustand der Pseudozufallszahlengeneratoren 18, 28 - der sich beispielsweise aus den letzten erzeugten Generatorwerten Zᵢ₋₁, Zᵢ₋₂, ... ergibt - sein.

In manchen Ausgestaltungen werden Pseudozufallszahlengeneratoren 18, 28 eingesetzt, deren Generatorwerte Zᵢ zusätzlich von einem geheimen Schlüssel abhängen, wie dies z.B. gemäß der ANSI-Norm X 9.17 vorgesehen ist. Diese Ausgestaltungen haben den Vorteil, daß die erzeugten Ergebniswerte Pᵢ selbst bei Kenntnis des Initialwerts S und der Anpassungswerte Dᵢ nicht ableitbar sind. Die Werte S und Dᵢ können daher offen zum Datenträger 12 übertragen werden, wenngleich sie nach wie vor in einer sicheren Umgebung, in der der geheime Schlüssel bekannt ist, ermittelt werden müssen.
Der geheime Schlüssel kann systemweit einheitlich sein oder für jeden Datenträger 12 individuell festgelegt werden.

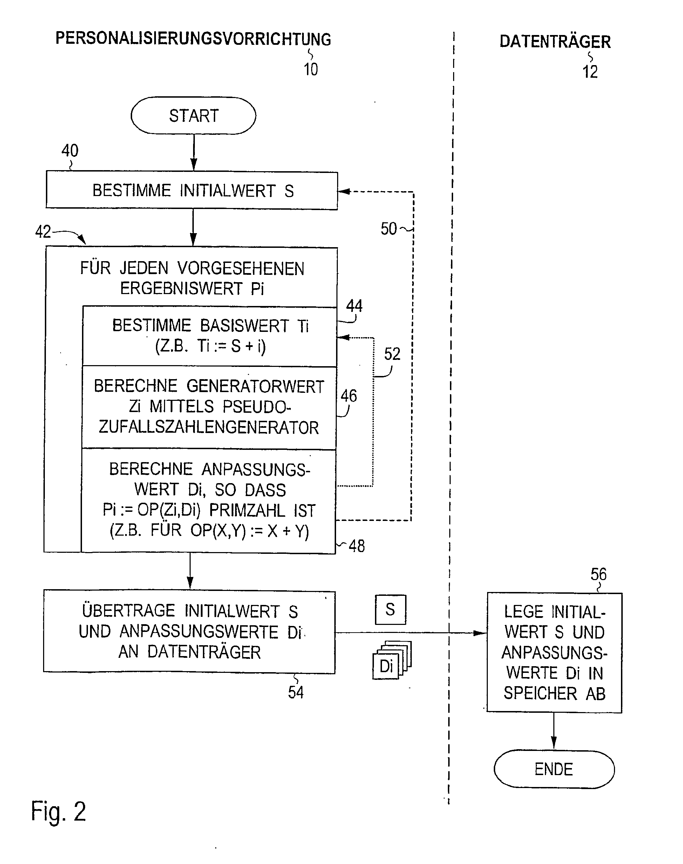

Fig. 2 zeigt die im vorliegenden Ausführungsbeispiel zur Berechnung der Anpassungswerte Dᵢ ausgeführten Schritte nochmals in Form eines Flußdiagramms. Für jeden zu personalisierenden Datenträger 12 wird zunächst in Schritt 40 der Initialwert S zufällig ausgewählt. Die Berechnungsschleife 42 erzeugt bei jedem Durchlauf einen Anpassungswert Dᵢ. Die Schleife 42 wird für jeden vorgesehenen Ergebniswert Pᵢ einmal ausgeführt, also beispielsweise mit den Indexwerten i =1, 2, ..., 200, wenn beim späteren Einsatz des Datenträgers 12 maximal 200 Ergebniswerte Pᵢ erzeugt werden sollen und daher 200 Anpassungswerte Dᵢ im Speicher 22 vorliegen müssen.

In Schritt 44 wird der jeweilige Basiswert Tᵢ festgelegt, beispielsweise durch die Berechnung Tᵢ := S + i. Der Pseudozufallszahlengenerator 18 erzeugt in Schritt 46 den entsprechenden Generatorwert Zᵢ. In Schritt 48 bestimmt das Anpassungswertmodul 20 den Anpassungswert Dᵢ derart, daß der durch die Operation OP(Zᵢ, Dᵢ) gegebene Wert - der spätere Ergebniswert Pᵢ - eine Primzahl ist bzw. in Ausführungsalternativen eine andere gewünschte Eigenschaft aufweist. Im vorliegenden Beispiel ist hierbei OP die Addition; es gilt also OP(x, y) := x + y.

Zur Ausführung von Schritt 48 wird im vorliegenden Beispiel ausgehend von Zᵢ die nächsthöhere Primzahl Pᵢ gesucht. Dies kann mittels einer Schleife geschehen, die vom Wert Zᵢ beziehungsweise, wenn Zᵢ gerade ist, Zᵢ + 1 ausgehend in Zweierschritten nach oben zählt, bis eine Primzahl erreicht ist. Der Anpassungswert Dᵢ wird dann als die Differenz Pᵢ - Zᵢ bestimmt.

Es ist möglich, daß innerhalb des für den Anpassungswert Dᵢ vorgesehenen Wertebereichs, ausgehend von einem Generatorwert Zᵢ, keine Primzahl auffindbar ist. In diesem Fall wird ein Rücksprung 50 ausgeführt, und das Verfahren beginnt in Schritt 40 mit der Bestimmung eines neuen Initialwerts S von vorne. Bei den oben erwähnten beispielhaften Parametern der Berechnung von 200 Primzahlen mit einer Länge von je 512 Bit bei Anpassungswerten Dᵢ von jeweils 12 Bit Länge beträgt die Wahrscheinlichkeit, daß sich in allen 200 Intervallen [Zᵢ, Zᵢ+2¹²⁻¹] je mindestens eine Primzahl Pᵢ befindet, ungefähr 99,8 %. Der Aussprung 50 wird also nur in ungefähr 0,2 % der Fälle durchgeführt.

In Ausführungsalternativen kann für die Anpassungswerte Dᵢ ein spezieller Wert mit der Bedeutung "ungültig" vorgesehen sein. Wenn in Schritt 48 kein geeigneter Anpassungswert Dᵢ berechnet werden kann, so wird Dᵢ für diesen Indexwert i auf "ungültig" gesetzt, was dem Datenträger 12 anzeigt, daß der ermittelte Ergebniswert Pᵢ verworfen werden muß. Es kann vorgesehen sein, die Anzahl der für einen Initialwert S auf "ungültig" gesetzten Anpassungswerte Dᵢ zu begrenzen, so daß der Aussprung 50 dann erfolgt, wenn die vorgegebene Maximalzahl überschritten wird. Auf diese Weise kann einerseits eine gewisse Mindestmenge an gültigen Ergebniswerten Pᵢ garantiert werden, während sich andererseits die Anzahl der unbrauchbaren Initialwerte S gegenüber dem einfachen Ausführungsbeispiel von Fig. 2 erheblich verringert.

Um in Ausführungsalternativen Speicherplatz für die Anpassungswerte Dᵢ zu sparen, kann in Schritt 46 das geringstwertige Bit von Zᵢ auf "1" gesetzt werden, so daß Zᵢ ungerade ist. Die Anpassungswerte Dᵢ im vorliegenden Ausführungsbeispiel sind dann stets gerade, so daß auf die Speicherung ihrer geringstwertigen Bits verzichtet werden kann. Entsprechend können auch weitere kleine Teiler gemieden werden, um den Speicherbedarf weiter zu verringern.

Allgemein brauchen die Generatorwerte Zᵢ nicht identisch zu den jeweils von dem PRNG 18 ausgegebenen Werten zu sein. Es sind vielmehr Ausgestaltungen vorgesehen, bei denen die Ergebnisse des PRNG 18 mit unterschiedlichen Berechnungsverfahren weiterverarbeitet werden, um die Generatorwerte Zᵢ zu erhalten.

In manchen Ausgestaltungen weist der Anpassungswert Dᵢ, wie oben bereits angedeutet, mehrere Komponenten auf, die in den Schritten 44 und/oder 46 und/oder 48 herangezogen werden. Beispielsweise kann Dᵢ in zwei Komponenten D'ᵢ, D"ᵢ zerfallen, wobei in Schritt 48 Pᵢ := OP (Zᵢ, D'ᵢ) berechnet wird und in Schritt 44 die Komponente D"ᵢ in die Bestimmung des Basiswerts Tᵢ eingeht; es kann beispielsweise Tᵢ := S + 256*i + D"ᵢ gelten. Falls in derartigen Ausführungsformen in Schritt 48 eine Veränderung der Komponente D"ᵢ des Anpassungswerts Dᵢ erfolgt, muß natürlich der Basiswert Tᵢ neu bestimmt werden. Der entsprechende Rücksprung zu Schritt 44 ist in Fig. 2 durch den gepunkteten Pfeil 52 angedeutet. Entsprechendes gilt, wenn eine Komponente von Dᵢ den Pseudozufallszahlengenerator 18 beeinflußt.

In weiteren Ausführungsvarianten braucht die Beziehung zwischen dem Ergebniswert Pᵢ und dem Generatorwert Zᵢ nicht von dem Anpassungswert Dᵢ abzuhängen; es kann also beispielsweise in Schritt 48 Pᵢ := Zᵢ oder Pᵢ := OP(Zᵢ) für eine einfache Transformation OP gelten. In einer besonders einfachen Weiterentwicklung wird dann in Schritt 44 der Basiswert Tᵢ durch Tᵢ := S + i + Dᵢ oder sogar nur Tᵢ := S + Dᵢ berechnet.

Nachdem in Schleife 42 alle Anpassungswerte Dᵢ bestimmt worden sind, werden diese und der Initialwert S in Schritt 54 an den Datenträger 12 übertragen und dort in Schritt 56 in den Speicher 22 eingeschrieben. Der Personalisierungsvorgang ist damit, soweit die vorliegenden Ausführungsbeispiele der Erfindung betroffen sind, abgeschlossen. Die hier beispielhaft im Zusammenhang mit der Personalisierung des Datenträgers 12 dargestellten Vorgänge können in Ausführungsalternativen auch im Zusammenhang mit anderen Herstellungs- oder Konfigurierungs- oder Wartungsvorgängen des Datenträgers 12 ausgeführt werden; die Vorrichtung 10 ist dann keine Personalisierungsvorrichtung, sondern ein anderes Gerät, das zur Berechnung und/oder Übertragung zumindest der Anpassungswerte Dᵢ eingerichtet ist.

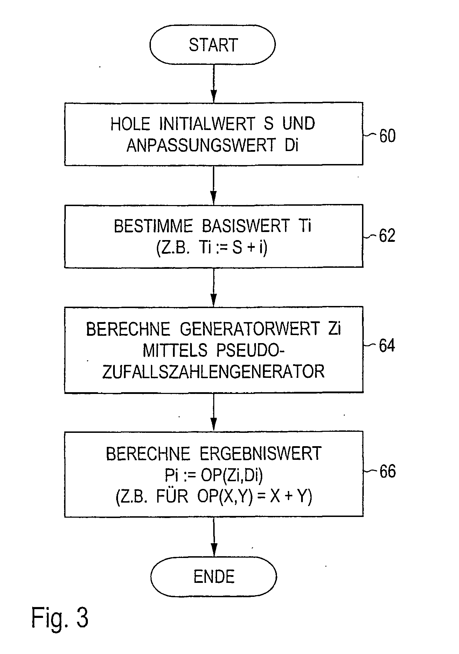

Das Flußdiagramm von Fig. 3 zeigt nochmals die Verfahrensschritte, mit denen während der Lebensdauer des Datenträgers 12 ein neuer Ergebniswert Pᵢ berechnet wird. In Schritt 60 werden der Initialwert S und der jeweils nächste Anpassungswert Dᵢ aus dem Speicher 22 ausgelesen. Schritt 62 betrifft die Berechnung des Basiswerts Tᵢ gemäß der auch in Schritt 44 verwendeten Formel; hier also z.B. Tᵢ := S + i. In Schritt 64 wird der Generatorwert Zᵢ mittels des Pseudozufallszahlengenerators 28 berechnet. Schließlich bestimmt in Schritt 66 das Ergebniswertmodul 30 den Ergebniswert Pᵢ durch Anwendung derselben Operation wie in Schritt 48 auf die Werte Zᵢ und Dᵢ; es gilt also im vorliegenden Beispiel Pᵢ := Zᵢ + Dᵢ.

Das Verfahren von Fig. 3 kann beliebig oft wiederholt werden, solange im Speicher 24 weitere Anpassungswerte Dᵢ₊₁, Dᵢ₊₂,... verfügbar sind. Wenn in den oben im Zusammenhang mit Fig. 2 beschriebenen Ausführungsvarianten die Berechnung der Anpassungswerte Dᵢ in abgewandelter Weise erfolgt, müssen natürlich auch die Berechnungsschritte 60 bis 66 von Fig. 3 entsprechend angepaßt werden.

## Patentansprüche

1. Verfahren zum Erzeugen einer Mehrzahl von Ergebniswerten (Pᵢ), von denen jeder eine vorgegebene Eigenschaft aufweist, in einer rechenleistungs- und speicherplatzlimitierten Umgebung, wobei das Verfahren von einem Prozessorkern (24) eines tragbaren Datenträgers (12) ausgeführt wird, und wobei zum Erzeugen eines jeden Ergebniswerts (Pᵢ):
a) je ein Basiswert (Tᵢ) bestimmt wird,
b) mittels eines Pseudozufallszahlengenerators (28) je ein Generatorwert (Zᵢ) zumindest auch in Abhängigkeit von dem in Schritt a) bestimmten Basiswert (Tᵢ) berechnet wird, und
c) der Ergebniswert (Pᵢ) zumindest auch in Abhängigkeit von dem in Schritt b) berechneten Generatorwert (Zᵢ) bestimmt wird,
**daduch gekennzeichnet daß**,
je ein extern vorausberechneter und gespeicherter Anpassungswert (Dᵢ) bei zumindest einem der Schritte a) bis c) herangezogen wird, um zu bewirken, daß der Ergebniswert (Pᵢ) die vorgegebene Eigenschaft aufweist.

2. Verfahren nach Anspruch 1, **dadurch gekennzeichnet, daß** zum Erzeugen eines jeden Ergebniswerts (Pᵢ) der jeweils herangezogene Basiswert (Tᵢ) zumindest auch in Abhängigkeit von einem extern vorausbestimmten und gespeicherten Initialwert (S) berechnet wird.

3. Verfahren nach Anspruch 1 oder Anspruch 2, **dadurch gekennzeichnet, daß** die Anpassungswerte (Dᵢ) bei der Komplettierung und/ oder Initialisierung und/oder Personalisierung des Datenträgers (12) in einen Speicher (22) des Datenträgers (12) eingeschrieben werden.

4. Verfahren nach einem der Ansprüche 1 bis 3, **dadurch gekennzeichnet, daß** die Stellenanzahl des Anpassungswerts (Dᵢ) höchstens die Hälfte oder höchstens ein Fünftel der Stellenanzahl des entsprechenden Ergebniswerts (Pᵢ) beträgt.

5. Verfahren nach einem der Ansprüche 1 bis 4, **dadurch gekennzeichnet, daß** die vorgegebene Eigenschaft jedes Ergebniswerts (Pᵢ) ist, daß der Ergebniswert (Pᵢ) eine Primzahl ist.

6. Verfahren nach einem der Ansprüche 1 bis 5, **dadurch gekennzeichnet, daß** zum Erzeugen eines jeden Ergebniswerts (Pᵢ) eine vorgegebene Operation (OP) unter Verwendung des jeweiligen Generatorwerts (Zᵢ) und zumindest eines Teil des jeweiligen Anpassungswerts (Dᵢ) ausgeführt wird.

7. Datenträger (12), insbesondere Chipkarte oder Chipmodul, mit einem Prozessorkern (24) und einem Speicher (22), wobei der Datenträger (12) zur Ausführung eines Verfahrens nach einem der Ansprüche 1 bis 6 eingerichtet ist.

8. Verfahren zum Vorausberechnen einer Mehrzahl von Anpassungswerten (Dᵢ) durch eine Vorrichtung (10) mit mindestens einem Computer, wobei die Anpassungswerte (Dᵢ) dazu vorgesehen sind, in einer externen, rechenleistungs- und speicherplatzlimitierten Umgebung zum Erzeugen einer Mehrzahl von Ergebniswerten (Pᵢ) verwendet zu werden, von denen jeder eine vorgegebene Eigenschaft aufweist, wobei zum Erzeugen eines jeden Anpassungswerts (Dᵢ):
a) je ein Basiswert (Tᵢ) bestimmt wird,
b) mittels eines Pseudozufallszahlengenerators (18) je ein Generatorwert (Zᵢ) zumindest auch in Abhängigkeit von dem in Schritt a) bestimmten Basiswert (Tᵢ) berechnet wird, und
c) eine vorgegebene Operation (OP) unter Verwendung des jeweiligen Generatorwerts (Zᵢ) ausgeführt wird,
wobei der jeweilige Anpassungswert (Dᵢ) bei zumindest einem der Schritte a) bis c) auf vorgegebene Weise herangezogen wird, und
wobei der jeweilige Anpassungswert (Dᵢ) derart bestimmt wird, daß das Ergebnis der in Schritt c) ausgeführten vorgegebenen Operation (OP) die vorgegebene Eigenschaft aufweist.

9. Verfahren nach Anspruch 8, **dadurch gekennzeichnet, daß** die vorausberechneten Anpassungswerte (Dᵢ) dazu vorgesehen sind, in einem Verfahren nach Anspruch 6 verwendet zu werden.

10. Datenträger (12) nach Anspruch 7, **dadurch gekennzeichnet, daß** der Speicher (22) dazu eingerichtet ist, Anpassungswerte (Dᵢ) aufzunehrnen, die mittels eines Verfahrens nach Anspruch 8 oder Anspruch 9 berechnet worden sind.

11. Vorrichtung (10) mit mindestens einem Computer, der dazu eingerichtet ist, Anpassungswerte (Dᵢ) mittels eines Verfahrens nach Anspruch 8 oder Anspruch 9 zu berechnen.

## Claims

1. A method for generating a plurality of result values (Pᵢ), each of which having a predefined property, in an environment that is limited with respect to computational power and memory space, wherein the method is executed by a processor core (24) of a portable data carrier (12), and wherein, for generating each of the result values (Pᵢ):
a) a respective base value (Tᵢ) is determined,
b) a respective generator value (Zᵢ) is calculated by means of a pseudo random number generator (28) at least also dependent on the base value (Tᵢ) determined in step a), and
c) the result value (Pᵢ) is determined at least also dependent on the generator value (Zᵢ) calculated in step b),
**characterized in that** a respective adaption value (Dᵢ), which has been externally pre-calculated and stored, is used in connection with at least one of steps a) to c) in order to cause that the result value (Pᵢ) has the predetermined property.

2. The method according to claim 1, **characterized in that**, for generating each result value (Pᵢ), the respective base value (Tᵢ) that has been used is calculated at least also dependent on an externally predetermined and stored initial value (S).

3. The method according to claims 1 or claim 2, **characterized in that** the adaption values (Dᵢ) are written into a memory (23) of the data carrier (12) when completing and/ or initializing and/ or personalizing the data carrier (12).

4. The method according to one of claims 1 to 3, **characterized in that** the number of places of the adaption value (Dᵢ) is at most half or at most one fifth of the number of places of the corresponding result value (Pᵢ).

5. The method according to one of claims 1 to 4, **characterized in that** the predetermined property of each result value (Pᵢ) is that the result value (Pᵢ) is a prime number.

6. The method according to one of claims 1 to 5, **characterized in that**, for generating each result value (Pᵢ), a predetermined operation (OP) is performed using the respective generator value (Zᵢ) and at least a part of the respective adaption value (Dᵢ).

7. A data carrier (12), in particular a smart card or a chip module, having a processor core (24) and a memory (22), wherein the data carrier (12) is adapted for performing a method according to one of claims 1 to 6.

8. A method for pre-calculating a plurality of adaption values (Dᵢ) by means of an apparatus (10) having at least one computer, wherein the adaption values (Dᵢ) are intended to be used in an external environment which is limited with respect to computational power and memory space for generating a plurality of result values (Pᵢ), each of the result values (Pᵢ) having a predetermined property, wherein, for generating each of the adaption value (Dᵢ):
a) a respective base value (Tᵢ) is determined,
b) a respective generator value (Zᵢ) is calculated by means of a pseudo random number generator (18) at least also dependent on the base value (Tᵢ) determined in step a), and
c) a predetermined operation (OP) is performed using the respective generator value (Zᵢ),
wherein the respective adaption value (Dᵢ) is used in connection with at least one of steps a) to c) in a predetermined manner, and
wherein the respective adaption value (Dᵢ) is determined such that the result of the predetermined operation (OP) performed in step c) has the predetermined property.

9. A method according to claim 8, **characterized in that** the predetermined adaption values (Dᵢ) are intended to be used in a method according to claim 6.

10. A data carrier (12) according to claim 7, **characterized in that** the memory (22) is adapted to store adaption values (Dᵢ) that have been calculated by means of a method according to claim 8 or claim 9.

11. An apparatus (10) having at least one computer, which is adapted for calculating adaption values (Dᵢ) by means of a method according to claim 8 or claim 9.

## Revendications

1. Procédé de génération d'une multitude de valeurs résultantes (Pᵢ) parmi lesquelles chacune présente une propriété prédéfinie, dans un environnement limité au niveau de la capacité de calcul et de l'espace mémoire, le procédé étant réalisé à partir d'un noyau de processeur (24) d'un support de données portatif (12) et, pour la génération de chaque valeur résultante (Pᵢ) :
a) une valeur de base (Tᵢ) étant déterminée,
b) au moyen d'un pseudo générateur de nombres aléatoires (28), une valeur de générateur (Zᵢ) étant au moins calculée, également, en fonction de la valeur de base (Tᵢ) déterminée à l'étape a), et
c) la valeur résultante (Pᵢ) étant au moins déterminée, également, en fonction de la valeur de générateur (Zᵢ) calculée à l'étape b),
**caractérisé en ce qu'**une valeur d'adaptation (Dᵢ) précalculée et enregistrée en externe est utilisée lors d'au moins l'une des étapes a) à c) pour faire que la valeur résultante (Pᵢ) présente la propriété prédéfinie.

2. Procédé selon la revendication 1, **caractérisé en ce que**, pour la génération de chaque valeur résultante (Pᵢ), la valeur de base (Tᵢ) utilisée est au moins calculée, également, en fonction d'une valeur initiale (S), prédéfinie et enregistrée en externe.

3. Procédé selon la revendication 1 ou la revendication 2, **caractérisé en ce que** les valeurs d'adaptation (Dᵢ) sont enregistrées lors du complètement et/ou de l'initialisation et/ou de la personnalisation du support de données (12) dans une mémoire (22) du support de données (12).

4. Procédé selon l'une quelconque des revendications 1 à 3, **caractérisé en ce que** le nombre de positions de la valeur d'adaptation (Dᵢ) s'élève au maximum à la moitié ou au maximum à un cinquième du nombre de positions de la valeur résultante (Pᵢ) correspondante.

5. Procédé selon l'une quelconque des revendications 1 à 4, **caractérisé en ce que** la propriété prédéfinie de chaque valeur résultante (Pᵢ) est que la valeur résultante (Pᵢ) est un nombre premier.

6. Procédé selon l'une quelconque des revendications 1 à 5, **caractérisé en ce que**, pour la génération de chaque valeur résultante (Pᵢ), une opération prédéfinie (OP) est réalisée avec utilisation de la valeur de générateur (Zᵢ) respective et d'au moins une partie de la valeur d'adaptation (Dᵢ) respective.

7. Support de données (12), en particulier une carte à puce ou un module à puce, comportant un noyau de processeur (24) et une mémoire (22), le support de données (12) étant configuré pour la réalisation d'un procédé selon l'une quelconque des revendications 1 à 6.

8. Procédé de précalcul d'une multitude de valeurs d'adaptation (Dᵢ) par un dispositif (10) comportant au moins un ordinateur, les valeurs d'adaptation (Dᵢ) étant prévues pour être utilisées dans un environnement externe, limité au niveau de la capacité de calcul et de l'espace mémoire, pour la génération d'une multitude de valeurs résultantes (Pᵢ), parmi lesquelles chacune présente une propriété prédéfinie, pour la génération de chaque valeur d'adaptation (Dᵢ) :
a) une valeur de base (Tᵢ) étant déterminée,
b) au moyen d'un pseudo générateur de nombres aléatoires (18), une valeur de générateur (Zᵢ) étant au moins calculée, également, en fonction de la valeur de base (Tᵢ) déterminée à l'étape a), et
c) une opération prédéfinie (OP) étant réalisée avec utilisation de la valeur de générateur (Zᵢ) respective,
la valeur d'adaptation respective (Dᵢ) étant utilisée d'une manière prédéfinie lors d'au moins l'une des étapes a) à c) et
la valeur d'adaptation respective (Dᵢ) étant déterminée de telle sorte que le résultat de l'opération prédéfinie (OP), réalisée à l'étape c), présente la propriété prédéfinie.

9. Procédé selon la revendication 8, **caractérisé en ce que** les valeurs d'adaptation précalculées (Dᵢ) sont prévues pour être utilisées dans un procédé selon la revendication 6.

10. Support de données (12) selon la revendication 7, **caractérisé en ce que** la mémoire (22) est configurée pour recevoir des données d'adaptation (Dᵢ) qui ont été calculées au moyen d'un procédé selon la revendication 8 ou la revendication 9.

11. Dispositif (10) comportant au moins un ordinateur qui est configuré pour calculer des valeurs d'adaptation (Dᵢ) au moyen d'un procédé selon la revendication 8 ou la revendication 9.
